(19) Europäisches Patentamt
European Patent Office
Office européen des brevets

(11) Veröffentlichungsnummer: **0 032 706**
**B1**

(12) # EUROPÄISCHE PATENTSCHRIFT

(45) Veröffentlichungstag der Patentschrift: **31.08.83**

(51) Int. Cl.³: **C 07 C 125/063**, C 07 C 149/00, A 01 N 47/10

(21) Anmeldenummer: **81100176.7**

(22) Anmeldetag: **13.01.81**

(54) **Indan-4-yl-N-alkyl-carbaminsäureester, Verfahren zu ihrer Herstellung sowie ihre Verwendung als Fungizide.**

(30) Priorität: **22.01.80 DE 3002202**

(43) Veröffentlichungstag der Anmeldung: **29.07.81 Patentblatt 81/30**

(45) Bekanntmachung des Hinweises auf die Patenterteilung: **31.08.83 Patentblatt 83/35**

(84) Benannte Vertragsstaaten: **AT BE CH DE FR GB IT LI NL**

(56) Entgegenhaltungen:
**DE-A-1 768 555**
**DE-A-2 739 192**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Peuker, Horst, Dr., Jahnstrasse 21, D-4019 Monheim (DE)**
Erfinder: **Grotkopp, Detlef, Dr., Cecilienallee 52, D-4000 Düsseldorf 1 (DE)**
Erfinder: **Wedemeyer, Karlfried, Dr., Bilharzstrasse 7, D-5000 Köln 80 (DE)**
Erfinder: **Brandes, Wilhelm, Dr., Eichendorffstrasse 3, D-5653 Leichlingen 1 (DE)**

EP 0 032 706 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Indan-4-yl-N-alkylcarbaminsäureester, Verfahren zu ihrer Herstellung sowie ihre Verwendung als Fungizide

Die vorliegende Erfindung betrifft spezielle neue Indan-4-yl-N-alkylcarbaminsäureester, mehrere Verfahren zu ihrer Herstellung sowie ihre Verwendung als Fungizide.

Es ist bereits bekannt geworden, dass N-Methylcarbaminsäureester von 4-Hydroxyindanen insektizid wirksam sind [vgl. die DE-AS Nr. 1249261 (Le A Nr. 10048) bzw. US-PS Nr. 3597472 und die DE-OS Nr. 1768555 (Le A Nr. 11471) bzw. US-PS Nr. 3712915]. Weiterhin ist bekannt, dass Indan-4-yl- und Indan-5-yl-N-alkylcarbaminsäureester allgemein fungizide Wirksamkeit besitzen [vgl. DE-OS Nr. 2739192 (Le A Nr. 18347) bzw. DE-OS Nr. 2739193 (Le A Nr. 18348)]. Deren Wirksamkeit befriedigt jedoch bei niedrigen Aufwandmengen nicht immer; so z.B. nicht die Wirkung gegen pflanzenschädigende Pilze der Gattung *Fusicladium*.

Es wurden nun spezielle neue Indan-4-yl-N-alkylcarbaminsäureester der Formel

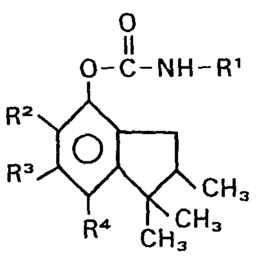

(I)

gefunden, in welcher

$R^1$ für Alkyl steht,

$R^2$ für Alkyl oder Aralkyl steht,

$R^3$ für Wasserstoff, Alkyl oder Halogen steht, und

$R^4$ für Wasserstoff, Alkyl, Halogen, Alkoxi- und Alkylmercaptogruppen steht.

Man erhält die Indan-4-yl-N-alkylcarbaminsäureester der Formel I, wenn man

a) 4-Hydroxyindane der Formel

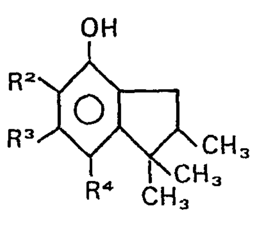

(II)

in welcher

$R^2$, $R^3$ und $R^4$ die oben angegebene Bedeutung besitzen, mit einem Alkylisocyanat der Formel

$$OCN-R^1 \qquad (III)$$

in welcher

$R^1$ die oben angegebene Bedeutung besitzt, umsetzt, oder

b) 4-Hydroxyindane der Formel II in einer ersten Stufe mit einem Überschuss an Phosgen in den entsprechenden Chlorkohlensäureester überführt und diesen mit Alkylamin umsetzt, oder

c) 4-Hydroxyindane der Formel II in einer ersten Stufe mit der äquivalenten Menge Phosgen zu dem entsprechenden Bis(indanyl)carbonat umsetzt und dieses in einer zweiten Stufe mit Alkylamin aufspaltet.

Die neuen Indan-4-yl-N-alkylcarbamate weisen starke fungizide Eigenschaften auf.

Überraschenderweise zeigen die erfindungsgemässen speziellen Indanyl-N-alkylcarbamate der Formel I, die im Gegensatz zu vorbekannten Verbindungen ähnlicher Struktur als gemeinsames Kriterium jeweils eine Methylgruppe in 1,1,2-Stellung am Indan-Ringsystem besitzen, eine erheblich höhere fungizide Wirkung als die aus dem Stande der Technik bekannten Verbindungen.

Von den erfindungsgemässen Verbindungen der Formel I sind bevorzugt diejenigen, in denen

$R^1$ für Alkyl mit 1 bis 4 Kohlenstoffatomen steht,

$R^2$ für Alkyl mit 1 bis 4 Kohlenstoffatomen oder für Benzyl steht,

$R^3$ für Wasserstoff, Halogen und Methyl steht, und

$R^4$ für Wasserstoff, Halogen, Alkyl mit 1 bis 4 Kohlenstoffatomen und für Methylmercapto steht.

Von besonderem Interesse sind aufgrund ihrer guten fungiziden Wirksamkeit insbesondere diejenigen Verbindungen der Formel I, bei denen $R^1$ und $R^2$ Methyl, $R^3$ Wasserstoff oder Chlor, und $R^4$ Wasserstoff oder Methyl bedeuten. Als Beispiel für eine solche Verbindung von bevorzugtem Interesse sei der 1,1,2,5-Tetramethylindan-4-yl-N-methylcarbaminsäureester genannt (s. Beispiel 1 bei den Herstellungsbeispielen).

Der Reaktionsablauf bei der Herstellung der erfindungsgemässen Verbindungen kann an folgenden Beispielen erläutert werden:

Verwendet man 4-Hydroxy-1,1,2,5-tetramethylindan und Methylisocyanat als Ausgangsstoffe, so lässt sich der Reaktionsablauf gemäss Verfahren a durch folgendes Formelschema wiedergeben:

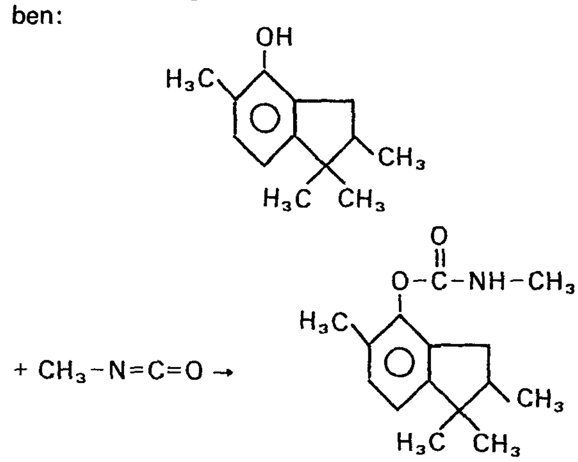

Verwendet man 4-Hydroxy-1,1,2,5-tetramethylindan, Phosgen und Methylamin als Ausgangsstoffe, so lässt sich der Reaktionsablauf gemäss Verfahren b durch das folgende Formelschema wiedergeben:

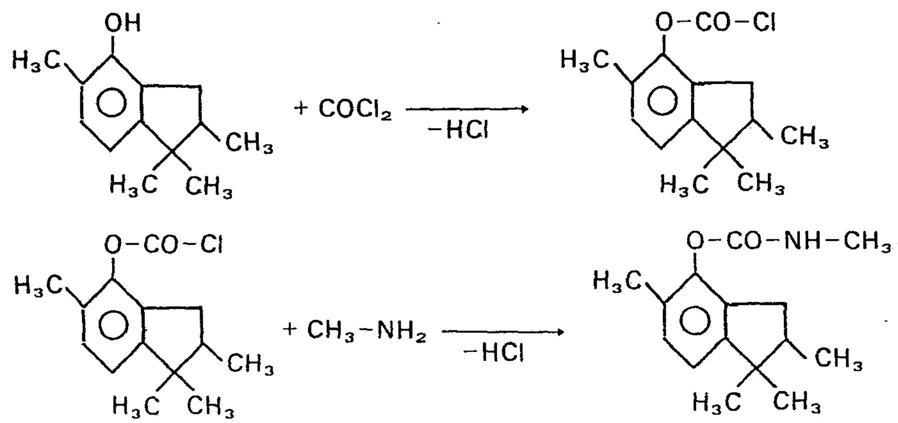


Verwendet man 4-Hydroxy-1,1,2,5-tetramethylindan, Phosgen und Methylamin als Ausgangsstoffe, so lässt sich der Reaktionsablauf gemäss Verfahren c durch das folgende Formelschema wiedergeben:

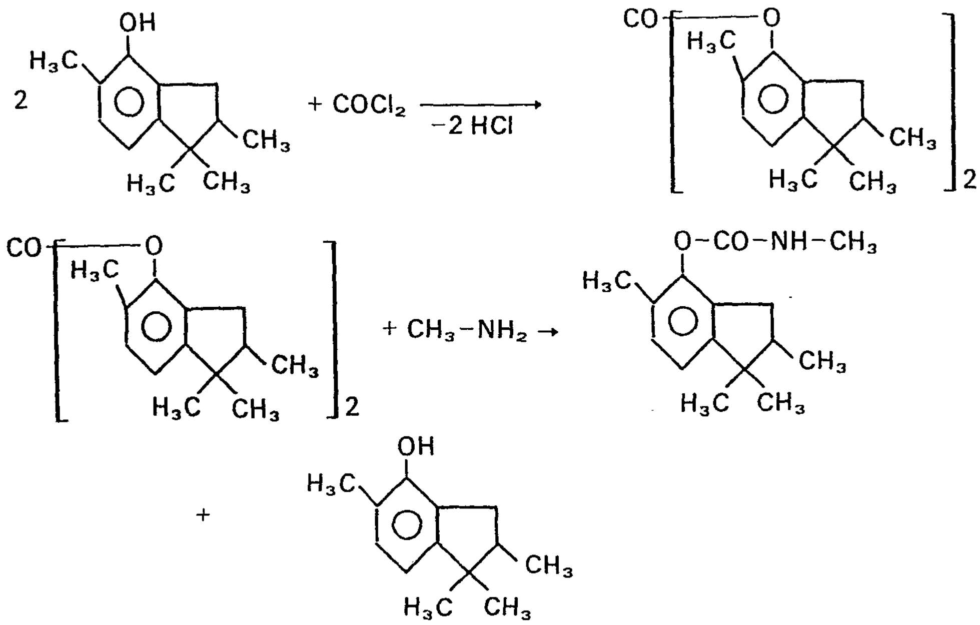


Die als Ausgangsstoffe zu verwendenden 4-Hydroxyindane sind durch die oben angegebene Formel II definiert. In dieser Formel besitzen $R^2$, $R^3$ und $R^4$ die oben zu Formel I genannten vorzugsweisen Bedeutungen.

Die Herstellung der Ausgangsstoffe der Formel II ist bekannt (vgl. US-PS Nr. 3057929). Sie erfolgt etwa durch Isomerisierung der entsprechenden Chromane in Gegenwart von Friedel-Crafts-Katalysatoren. So ist z.B. das 4-Hydroxy-1,1,2,5-tetramethylindan durch Behandlung von 2,2,3,8-Tetramethylchroman mit Aluminium-(III)chlorid zugänglich.

Die zur Herstellung der 4-Hydroxyindane der Formel II verwendeten Chromane können durch Umsetzung von Phenolen, wie z.B. o-Kresol oder 2,4-Dimethylphenol, mit Isopren gewonnen werden [vgl. Houben-Weyl, „Methoden der organischen Chemie", 4. Aufl., Bd. 6/1c, S. 987 bis 989 (1976)].

Verbindungen der Formel II, bei denen $R^4$ für Halogen steht, lassen sich durch Halogenierung der entsprechenden substituierten 4-Hydroxyindane gewinnen. So ist z.B. 7-Brom-4-hydroxy-1,1,2,5-tetramethylindan durch Bromierung von 4-Hydroxy-1,1,2,5-tetramethylindan in Eisessig zugänglich [vgl. Houben-Weyl, „Methoden der organischen Chemie", 4. Aufl., Bd. 5/4, S. 260 ff. (1960)].

Verbindungen, bei denen $R^4$ für Thioalkyl steht, können durch Umsetzung substituierter 4-Hydroxyindane mit freier 7-Stellung mit einem Dialkyldisulfid in Gegenwart einer Sulfonsäure hergestellt werden (vgl. BE-PS Nr. 627306) oder durch Rhodanierung der 4-Hydroxyindane mit Dirhodan und anschliessender Verseifung [vgl. H.P. Kaufmann und Weber, „Arch. Pharm.", *267*, 192 (1929); Kohn, M. *58*, 73, 78 (1931)]. So ist z.B. 7-Methylthio-4-hydroxy-1,1,2,5-tetramethylindan aus 4-Hydroxy-1,1,2,5-tetramethylindan und Dirhodan zugänglich.

Die weiterhin für die Herstellung der erfindungsgemässen Verbindungen der Formel I benötigten Ausgangsstoffe, Phosgen und Alkylisocyanat für Verfahren a bzw. Phosgen und alkylamin für die Verfahrensvarianten b und c sind allgemein bekannt. Bevorzugt werden solche Alkylisocyanate bzw. Alkylamine verwendet, die einen Alkylrest mit 1 bis 4 C-Atomen enthalten. Zu nennen sind hier: Methylisocyanat, Äthylisocyanat, Butylisocyanat sowie die folgenden Amine: Methylamin, Äthylamin, Isopropylamin, Butylamin, Isobutylamin.

Die Herstellung der erfindungsgemässen Verbindungen der Formel I kann nach den oben angegebenen Verfahrensvarianten a, b und c erfolgen.

Die Reaktion nach Verfahren a kann in inerten Lösungsmitteln vorgenommen werden. Hierfür eignen sich z.B. Kohlenwasserstoffe wie Benzin und Benzol, chlorierte Kohlenwasserstoffe wie Chlorbenzol, aber auch Äther wie Dioxan oder Mischungen aus diesen Lösungsmitteln. Die Umsetzung wird durch Zugabe eines tertiären Amins, z.B. Triäthylamin oder Diazobicyclooctan, katalysiert. Die Reaktionstemperaturen können in einem grösseren Bereich variiert werden. Im allgemeinen wird man jedoch zwischen 0 und 150°C arbeiten, vorzugsweise zwischen 20 und 110°C.

Arbeitet man nach Verfahrensvariante b, so wird in der ersten Stufe das 4-Hydroxyindan der Formel II zweckmässigerweise in Gegenwart inerter Lösungsmittel wie aromatische, gegebenenfalls chlorierte, Kohlenwasserstoffe, so z.B. Benzol, Toluol, Xylol oder Chlorbenzol, mit einem Überschuss an Phosgen in den Chlorkohlensäureester überführt. Die entstehende Salzsäure wird durch Zutropfen einer Base, zweckmässigerweise Natriumhydroxid, gebunden und so der pH-Wert der Reaktionslösung unter 7 gehalten. Im allgemeinen wird man bei einer Reaktionstemperatur zwischen −20 und +20°C, vorzugsweise zwischen −10 und +10°C, arbeiten. In der zweiten Stufe wird der Chlorkohlensäureester entweder nach Isolierung oder aber direkt in der erhaltenen Reaktionslösung mit der äquivalenten Menge Alkylamin umgesetzt. Dabei arbeitet man ebenfalls zweckmässigerweise in Gegenwart von inerten Lösungsmitteln wie aromatischen und aliphatischen, gegebenenfalls chlorierten Kohlenwasserstoffen wie Benzol, Chlorbenzol, Benzin, Tetrachlorkohlenstoff, oder Äthern wie Dioxan. Die Reaktionstemperaturen können wiederum in einem gewissen Bereich variiert werden; man arbeitet im allgemeinen zwischen −20 und +20°C, vorzugsweise zwischen −10 und +10°C.

Arbeitet man schliesslich nach Verfahrensvariante c, so wird in der ersten Stufe das 4-Hydroxyindan der Formel II mit der äquivalenten Menge Phosgen zum Bis(indanyl)kohlensäureester umgesetzt. Man führt die Reaktion zweckmässigerweise in inerten Lösungsmitteln wie aromatischen Kohlenwasserstoffen, z.B. Benzol und Toluol, durch, wobei man die entstehende Salzsäure durch Zusetzen einer Base, vorzugsweise Alkalihydroxid, bindet. Der pH-Wert der Reaktionslösung sollte etwa bei 8 liegen. Die Reaktionstemperatur kann in einem grösseren Bereich variieren, sie liegt im allgemeinen zwischen 0 und 100°C, vorzugsweise zwischen +20 und +60°C. Das in der ersten Stufe gebildete Carbonat wird anschliessend mit Alkylamin aufgespalten. Dabei arbeitet man zweckmässigerweise ohne Lösungsmittel. Die Reation kann jedoch auch in Lösungsmitteln durchgeführt werden. Die Reaktionstemperaturen liegen zwischen −30 und +40°C, vorzugsweise zwischen −10 und +20°C.

Die erfindungsgemässen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromyzetes, Oomyzetes, Chytridiomyzetes, Zygomyzetes, Ascomyzetes, Basidiomyzetes, Deuteromyzetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemässen Verbindungen der Formel I besitzen insbesondere eine gute Wirkung gegen *Fusicladium dendriticum*, den Erreger des Apfelschorfs. Auch eine Wirksamkeit gegen *Pellicularia sasakii* an Reispflanzen liegt vor.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebelformulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosoltreibgas, wie Halogenkohlenwasserstoffe

sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylenfettsäureester, Polyoxyäthylenfettalkoholäther, z.B. Alkylarylpolyglykoläther, Alkylsulfonate, Alkylsulfate, Arylsulfonate sowie Eiweisshydrolysate; als Dispergiermittel kommen in Frage: z.B. Ligninsulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.% Wirkstoff, vorzugsweise zwischen 0,5 und 90%.

Die erfindungsgemässen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfrass, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Giessen, Tauchen, Spritzen, Sprühen, Vernebeln, Verdampfen, Injizieren, Verschlämmen, Verstreichen, Stäuben, Streuen, Trokkenbeizen, Feuchtbeizen, Nassbeizen, Schlämmbeizen oder Inkrustieren.

Bei der Behandlung von Pflanzenteilen können die Wirkstoffkonzentrationen in den Anwendungsformen in einem grösseren Bereich variiert werden. Sie liegen im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50 g/kg Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02%, am Wirkungsort erforderlich.

*Herstellungsbeispiele*

*Beispiel 1:*

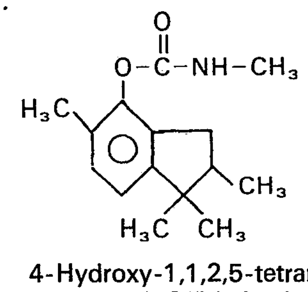

600 g 4-Hydroxy-1,1,2,5-tetramethylindan (ca. 3,16 mol), 10 ml Triäthylamin und 194 g (ca. 3,40 mol) Methylisocyanat werden in 3,0 l Ligroin bei Raumtemperatur gelöst, anschliessend auf 80° C erwärmt und ca. 20 h bei dieser Temperatur nachgerührt. Beim Abkühlen kristallisiert ab 55° C das Produkt aus. Nach Absaugen und Trocknen wird aus Ligroin umkristallisiert.

Man erhält 737 g 1,1,2,5-Tetramethylindan-4-yl-N-methylcarbaminsäureester vom Fusionspunkt 109,5-110,5° C.

Die Ausbeute beträgt 94,5% der Theorie.

*Beispiel 2:*

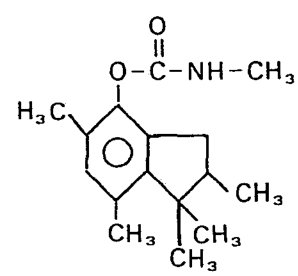

34 g 4-Hydroxy-1,1,2,5,7-pentamethylindan, 14,3 g Methylisocyanat und einige Tropfen Triäthylamin werden in 102 ml Ligroin gelöst und über Nacht bei leichtem Rückfluss (ca. 70° C) gerührt. Nach Abkühlen auf 30° C wird mit 40 ml Wasser verrührt, das farblose Kristallisat abgesaugt und getrocknet. Umkristallisation aus Ligroin und Toluol ergibt 27,7 g 1,1,2,5,7-Pentamethylindan-4-yl-N-methylcarbaminsäureester vom Fusionspunkt 130,5-131° C.

In entsprechender Weise, wie in den obigen Beispielen angegeben, werden die folgenden Verbindungen der allgemeinen Formel

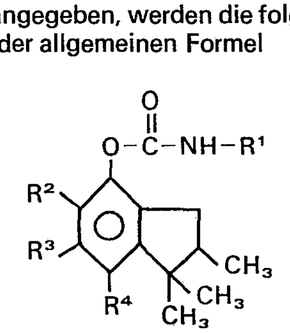 (I)

erhalten:

| Beispiel Nr. | $R^1$ | $R^2$ | $R^3$ | $R^4$ | Fp. (°C) |
|---|---|---|---|---|---|
| 3 | $CH_3$ | $CH_3$ | Cl | H | 156,5-158,5 |
| 4 | $C_2H_5$ | $CH_3$ | H | H | 64-65 |
| 5 | i-$C_3H_7$ | $CH_3$ | H | H | 77-78 |
| 6 | $CH_3$ | $CH_3$ | H | Br | 127-128 |
| 7 | $CH_3$ | $CH_3$ | H | $S-CH_3$ | 104,5-106 |
| 8 | $CH_5$ | $CH_2-C_6H_5$ | H | Cl | 125,5-126 |
| 9 | $CH_3$ | $C_2H_5$ | H | H | 93,94 |
| 10 | $CH_3$ | $CH_3$ | H | Cl | 105 |
| 11 | $CH_3$ | $CH_3$ | $CH_3$ | H | 116 |

*Beispiel A:*

*Fusicladium*-Test (Apfel)/Protektiv
Lösungsmittel: 4,7 Gew.-Teile Aceton
Emulgator: 0,3 Gew.-Teile Alkylarylpolyglykoläther
Wasser: 95 Gew.-Teile

Man vermischt die für die gewünschte Wirkstoffkonzentration in der Spritzflüssigkeit nötige Wirkstoffmenge mit der angegebenen Menge des Lösungsmittels und verdünnt das Konzentrat mit der angegebenen Menge Wasser, welches die genannten Zusätze enthält.

Mit der Spritzflüssigkeit bespritzt man junge Apfelsämlinge, die sich im 4- bis 6-Blattstadium befinden, bis zur Tropfnässe. Die Pflanzen verbleiben 24 h bei 20°C und einer relativen Luftfeuchtigkeit von 70% im Gewächshaus. Anschliessend werden sie mit einer wässerigen Konidiensuspension des Apfelschorferregers *(Fusicladium dentriticum)* inokuliert und 18 h lang in einer Feuchtkammer bei 18 bis 20°C und 100% relativer Luftfeuchtigkeit inkubiert.

Die Pflanzen kommen dann erneut für 14 d ins Gewächshaus.

15 d nach der Inokulation wird der Befall der Sämlinge bestimmt. Die erhaltenen Boniturwerte werden in Prozent Befall umgerechnet. 0% bedeutet keinen Befall, 100% bedeutet, dass die Pflanzen vollständig befallen sind.

Bei diesem Test zeigen z.B. die folgenden Verbindungen eine im Vergleich zum Stande der Technik überlegene Wirkung: Verbindungen gemäss Herstellungsbeispielen 4, 2, 9, 3, 6, 7, 1.

## Patentansprüche

1. Indan-4-yl-N-alkylcarbaminsäureester der Formel

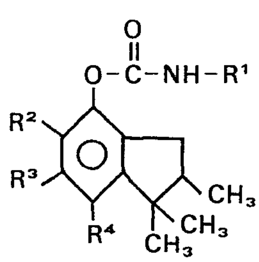

(I)

in welcher
$R^1$ für Alkyl steht,
$R^2$ für Alkyl oder Aralkyl steht,
$R^3$ für Wasserstoff, Alkyl oder Halogen steht, und
$R^4$ für Wasserstoff, Alkyl, Halogen, Alkoxi- und Alkylmercaptogruppen steht.

2. Verbindungen gemäss Formel (I) in Anspruch 1, wobei
$R^1$ und $R^2$ Methyl, $R^3$ Wasserstoff oder Chlor, und $R^4$ Wasserstoff oder Methyl bedeuten.

3. 1,1,2,5-Tetramethylindan-4-yl-N-methylcarbaminsäureester der Formel

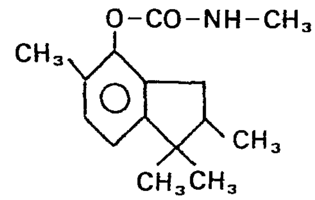

4. Verfahren zur Herstellung von Indan-4-yl-N-alkylcarbaminsäureestern, dadurch gekennzeichnet, dass man
a) 4-Hydroxyindane der Formel

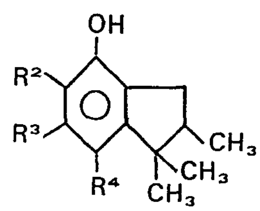

(II)

in welcher
$R^2$, $R^3$ und $R^4$ die in Anspruch 1 angegebene Bedeutung besitzen, mit einem Alkylisocyanat der Formel

$$OCN-R^1 \qquad (III)$$

in welcher
$R^1$ die in Anspruch 1 angegebene Bedeutung besitzt, umsetzt, oder
b) 4-Hydroxyindane der Formel (II) in einer ersten Stufe mit einem Überschuss an Phosgen in den entsprechenden Chlorkohlensäureester überführt und diesen mit Alkylamin umsetzt, oder
c) 4-Hydroxyindane der Formel (II) in einer ersten Stufe mit der äquivalenten Menge Phosgen

zu dem entsprechenden Bis(indanyl)carbonat umsetzt und dieses in einer zweiten Stufe mit Alkylamin aufspaltet.

5. Fungizide Mittel, gekennzeichnet durch einen Gehalt an mindestens einem Indan-4-yl-N-alkylcarbaminsäureester der Formel (I).

6. Verfahren zur Bekämpfung von Pilzen, dadurch gekennzeichnet, dass man Indan-4-yl-N-alkylcarbaminsäureester der Formel (I) auf Pilze oder ihren Lebensraum einwirken lässt.

7. Verwendung von Indan-4-yl-N-alkylcarbaminsäureestern der Formel (I) zur Bekämpfung von Pilzen.

8. Verfahren zur Herstellung von fungiziden Mitteln, dadurch gekennzeichnet, dass man Indan-4-yl-N-alkylcarbaminsäureester der Formel (I) mit Streckmitteln und/oder oberflächenaktiven Mitteln vermischt.

## Claims

1. N-Alkylcarbamic acid indan-4-yl esters of the formula

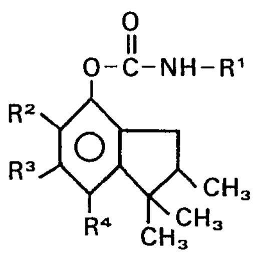

(I)

in which

$R^1$ represents alkyl,

$R^2$ represents alkyl or aralkyl,

$R^3$ represents hydrogen, alkyl or halogen, and

$R^4$ represents hydrogen, alkyl, halogen or an alkoxy or alkylmercapto group.

2. Compounds according to formula (I) in claim 1, wherein

$R^1$ and $R^2$ denote methyl, $R^3$ denotes hydrogen or chlorine, and $R^4$ denotes hydrogen or methyl.

3. N-methylcarbamic acid 1,1,2,5-tetramethylindan-4-yl ester of the formula

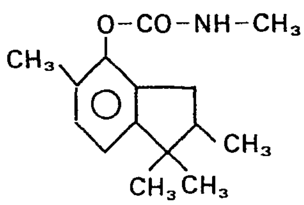

4. Process for the preparation of N-alkylcarbamic acid indan-4-yl esters, characterised in that

(a) 4-hydroxyindanes of the formula

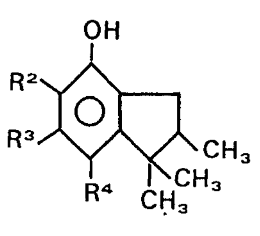

(II)

in which

$R^2$, $R^3$ and $R^4$ have the meaning indicated in claim 1, are reacted with an alkyl isocyanate of the formula

$$OCN-R^1 \qquad (III)$$

in which

$R^1$ has the meaning indicated in claim 1, or

(b) 4-hydroxyindanes of the formula (II) are converted into the corresponding chlorocarbonic acid esters with an excess of phosgene in a first stage, and these esters are reacted with an alkylamine, or

(c) 4-hydroxyindanes of the formula (II) are reacted with an equivalent amount of phosgene to give the corresponding bis(indanyl) carbonate, in a first stage, and this product is split with alkylamine in a second stage.

5. Fungicidal agents, characterised in that they contain at least one N-alkylcarbamic acid indan-4-yl ester of the formula (I).

6. Process for combating fungi, characterised in that N-alkylcarbamic acid indan-4-yl esters of the formula (I) are allowed to act on fungi or their environment.

7. Use of N-alkylcarbamic acid indan-4-yl esters of the formula (I) for combating fungi.

8. Process for the preparation of fungicidal agents, characterised in that N-alkylcarbamic acid indan-4-yl esters of the formula (I) are mixed with extenders and/or surface-active agents.

## Revendications

1. Esters d'acides indan-4-yl-N-alkylcarbamiques de formule

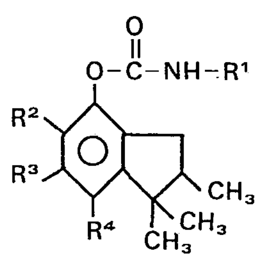

(I)

dans laquelle

$R^1$ représente un groupe alkyle,

$R^2$ représente un groupe alkyle ou un groupe aralkyle,

$R^3$ représente un atome d'hydrogène, un groupe alkyle ou un atome d'halogène, et

$R^4$ représente un atome d'hydrogène, un groupe alkyle, un atome d'halogène, un groupe alcoxy ou un groupe alkylmercapto.

2. Composés de formule (I) suivant la revendication 1, dans lesquels

$R^1$ et $R^2$ représentent chacun un groupe méthyle, $R^3$ un atome d'hydrogène ou un atome de chlore, tandis que $R^4$ représente un atome d'hydrogène ou un groupe méthyle.

3. Ester d'acide 1,1,2,5-tétraméthylindan-4-yl-N-méthylcarbamique de formule

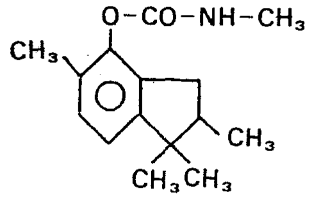

4. Procédé de préparation d'esters d'acides indan-4-yl-N-alkylcarbamiques, caractérisé en ce qu'on fait réagir des

a) 4-hydroxyindanes de formule

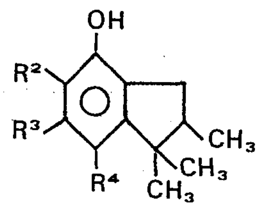

(II)

dans laquelle

$R^2$, $R^3$ et $R^4$ ont les significations indiquées dans la revendication 1, avec un alkylisocyanate de formule

$$OCN-R^1 \qquad (III)$$

dans laquelle

$R^1$ a la signification indiquée dans la revendication 1, ou

b) dans une première étape, on transforme des 4-hydroxyindanes de formule (II) en esters correspondants d'acide chlorocarbonique avec un excès de phosgène et l'on fait réagir ces esters avec une alkylamine, ou

c) dans une première étape, on fait réagir des 4-hydroxyindanes de formule (II) avec la quantité équivalente de phosgène pour obtenir le bis-(indanyl)carbonate correspondant et, dans une deuxième étape, on dissocie ce dernier avec une alkylamine.

5. Agents fongicides, caractérisés en ce qu'ils contiennent au moins un ester d'acide indan-4-yl-N-alkylcarbamique de formule (I).

6. Procédé en vue de combattre les champignons, caractérisé en ce qu'on fait réagir des esters d'acides indan-4-yl-N-alkylcarbamiques de formule (I) sur des champignons ou leurs biotopes.

7. Utilisation d'esters d'acides indan-4-yl-N-alkylcarbamiques de formule (I) pour combattre les champignons.

8. Procédé de préparation d'agents fongicides, caractérisé en ce qu'on mélange des esters d'acides indan-4-yl-N-alkylcarbamiques de formule (I) avec des diluants et/ou des agents tensioactifs.